# EUROPÄISCHE PATENTSCHRIFT

(11) **EP 2 573 677 B1**
(45) Veröffentlichungstag und Bekanntmachung des Hinweises auf die Patenterteilung: **03.06.2020**
(21) Anmeldenummer: 12006672.5
(22) Anmeldetag: 24.09.2012
(51) Int. Cl.: G06F 9/46, G06F 21/62

(54) **Datenaustausch zwischen Applikationen**
Data exchange between applications
Échange de données entre des applications

(30) Priorität: 26.09.2011 DE 102011114415
(43) Veröffentlichungstag der Anmeldung: 27.03.2013
(73) Patentinhaber: Giesecke+Devrient Mobile Security GmbH, 81677 München (DE)
(72) Erfinder: Treger, Jörn, 83022 Rosenheim (DE); Fladee, Ingeborg, 80637 München (DE)

(56) Entgegenhaltungen:
- WO-A2-2004/015542
- Sun ET AL: "Runtime Environment Specification Java Card(TM) Platform, Version 3.0.1 Connected Edition", , 31. Mai 2009 (2009-05-31), Seiten 1-244, XP055051641, Gefunden im Internet: URL:http://www.oracle.com/technetwork/java /javasebusiness/downloads/java-archive-dow nloads-javame-419430.html#java_card_kit-3. 0.1-rr-spec-oth-JPR [gefunden am 2013-01-29]
- Sun Et Al: "Runtime Environment Specification Java Card(TM) Platform, Version 3.0.1 Connected Edition, Class JCSystem", , 31. Mai 2009 (2009-05-31), XP055051886, Gefunden im Internet: URL:http://www.oracle.com/technetwork/java /javasebusiness/downloads/java-archive-dow nloads-javame-419430.html#java_card_kit-3. 0.1-rr-spec-oth-JPR [gefunden am 2013-01-31]
- Michael Montgomery ET AL: "Secure Object Sharing in Java Card", USENIX Workshop on Smartcard Technology Chicago, 11 May 1999 (1999-05-11), XP055147139, Retrieved from the Internet: URL:http://static.usenix.org/events/smartc ard99/full_papers/montgomery/montgomery.pd f [retrieved on 2014-10-16]

## Beschreibung

Die vorliegende Erfindung betrifft ein Verfahren zum Austauschen von Nutzdaten zwischen Applikationen auf einem portablen Datenträger sowie einen entsprechend eingerichteten Datenträger.

Applikationen auf einem portablen Datenträger, beispielsweise Java Card™ Applets auf einer Java Card™, können aus Sicherheitsgründen nicht in beliebiger Weise größere Datenmengen, welche beispielsweise als Nutzdaten eines Objektes vorliegen können, untereinander austauschen. In der Regel sind aus Sicherheitsgründen Objekte, die im Eigentum einer Applikation stehen - gewöhnlich derjenigen Applikation, welche das entsprechende Objekt erzeugt hat -, vor dem Zugriff durch eine andere Applikation geschützt.

Es sind verschiedene Mechanismen bekannt, mittels derer in beschränktem Rahmen oder unter gewissen Sicherheitseinbußen ein begrenzter Datenaustausch zwischen Applikationen auf einem portablen Datenträger möglich ist. Diese werden auch "Object Sharing"-Mechanismen genannt. Dabei können von einer ersten Applikation in definierter Weise Schnittstellen bereitgestellt werden, welche es einer zweiten Applikation beispielsweise erlauben, gewisse Methoden der ersten Applikation aufzurufen. Bei einem solchen Aufruf können von der ersten Applikation auch Parameter an eine solche Methode der zweiten Applikation übergeben werden. Ein Zugriff auf Objekte der ersten Applikation kann dadurch aber nicht erreicht werden, selbst wenn ein solches Objekt als Parameter in der angedeuteten Weise übergeben wird, da ein Zugriff auf das Objekt selbst weiterhin an die Eigentümerschaft an dem Objekt gebunden ist.

Größere Datenmengen können bisher lediglich über globale Variablen, im Zusammenhang mit einer Java Card™ beispielsweise über den bekannten APDU-Buffer, erfolgen. Dies hat allerdings den Nachteil, dass ein Zugriff dann nicht nur einer dazu vorgesehenen Applikation, sondern prinzipiell allen auf dem Datenträger installierten Applikationen ermöglicht wird. Im Zusammenhang mit sicherheitsrelevanten Daten ist ein solches Vorgehen deshalb zu vermeiden.

Die angedeuteten, bekannten Mechanismen zum Austauschen von Daten zwischen verschiedenen Applikationen auf einem portablen Datenträger sind mit Bezug auf eine Java Card™ detailliert in dem Dokument "Runtime Environment Specification, Java Card™ Platform, Version 3.0.1, Classic Edition", der Firma Sun Microsystems Inc., Mai 2009, beschrieben, insbesondere in Kapitel 6 dieser Spezifikation.

Weiterhin beschreibt die Runtime Environment Specification Java Card(TM) Platform, Version 3.0.1 Connected Edition von Sun et al. einen Austausch von Objekten zwischen Applikationen auf einer JavaCard.

Die Runtime Environment Specification Java Card(TM) Platform, Version 3.0.1 Connected Edition, Class JCSystem von Sun et al. offenbart Details zu einer Funktion transferOwnership.

Die WO 2004/015542 A2 zeigt ein Verfahren und eine Vorrichtung zum Regeln des Zugriffs auf Objekte durch berechtigte Entitäten.

Michael Montgomery et al. beschreiben in der Veröffentlichung Secure Object Sharing in Java Card das Prinzip von SIO (Shareable Interface Objects).

Aufgabe der vorliegenden Erfindung ist es demnach, ein Verfahren vorzuschlagen, welches ein Austauschen von größeren Datenmengen zwischen Applikationen auf einem portablen Datenträger auf einfache und sichere Weise erlaubt.

Diese Aufgabe wird durch ein Verfahren und einen Datenträger mit den Merkmalen der unabhängigen Ansprüche gelöst. Vorteilhafte Ausgestaltungen und Weiterbildungen sind in den abhängigen Ansprüchen angegeben.

Ein erfindungsgemäßes Verfahren zum Austauschen von Nutzdaten auf einem portablen Datenträger zwischen einer Quellapplikation, welche Eigentümer eines die Nutzdaten umfassenden Objekts ist, und einer Zielapplikation, wobei ein Zugriff auf das Objekt einem Eigentümer des Objekts vorbehalten ist, umfasst zumindest einen Schritt des Erzeugens von dem Objekt zugeordneten Eigentümerausweisdaten, welche die Zielapplikation als Eigentümer des Objekts ausweisen. Der Schritt des Erzeugens wird dabei von einer dazu eingerichteten Instanz des Datenträgers durchgeführt. Vorzugsweise ist die erzeugende Instanz ein Betriebssystem des Datenträgers.

Ein erfindungsgemäßer portabler Datenträger umfasst einen Prozessor, einen Speicher sowie zumindest eine Quellapplikation und eine Zielapplikation, welche auf dem Datenträger ausführbar sind, wobei die Quellapplikation Eigentümer eines Nutzdaten umfassenden Objektes ist, und wobei ein Zugriff auf das Objekt einem Eigentümer des Objekts vorbehalten ist. Erfindungsgemäß umfasst der Datenträger weiter eine Einrichtung zum Erzeugen von Eigentümerausweisdaten, welche eingerichtet ist, dem Objekt zugeordnete Eigentümerausweisdaten zu erzeugen, welche die Zielapplikation als Eigentümer des Objekts ausweisen. D.h. mit der Einrichtung zum Erzeugen der Eigentümerausweisdaten implementiert die erzeugende Instanz des Datenträgers die entsprechende Funktionalität.

Auf diese Weise wird es möglich, der Zielapplikation dadurch Zugriff auf das Objekt, welches ursprünglich die Quellapplikation als alleinigen Eigentümer kennt, zu gewähren, dass gemäß den erfindungsgemäß erzeugten Eigentümerausweisdaten nun auch die Zielapplikation - neben der Quellapplikation - als Eigentümer des Objekts ausgewiesen wird. Eine beim Zugriff auf das Objekt die Eigentümerschaft prüfende Kontrollinstanz des Datenträgers, im Falle einer Java Card™ beispielsweise eine Virtuelle Maschine, wird, je nach Art des Zugriffs auf das Objekt, die Quellapplikation oder die Zielapplikation als Eigentümer des Objekts erkennen und einen entsprechenden Zugriff erlauben oder verbieten. Sowohl für die Quellapplikation als auch für die Zielapplikation kann, wie nachstehend beschrieben, eine Art des Zugriffs bereitgestellt werden, die der entsprechenden Applikation Zugriff auf das Objekt gestattet, da die jeweilige Applikation dabei als Eigentümer des Objekts erkannt wird.

Damit kann das Problem gelöst werden, wie auf einfache und sichere Weise größere Datenmengen zwischen verschiedenen, auf einem portablen Datenträger ausführbaren Applikationen ausgetauscht werden können. Ein Zugriff auf solche Daten, welche ursprünglich im Eigentum der Quellapplikation stehen, kann erfindungsgemäß gezielt lediglich einer einzelnen anderen Applikationen erlaubt werden, ohne dass, wie bisher bei der Verwendung globaler Datenstrukturen, sämtliche auf dem Datenträger ausführbaren Applikationen Zugriff auf die auszutauschenden Nutzdaten erhalten.

Wie nachstehend genauer beschrieben, kann das erfindungsgemäße Verfahren in einfacher Weise in bestehende Architekturen integriert werden, ohne dass diese dazu in bereits bestehenden Anteilen wesentlich geändert werden müssten. Die Sicherheit des erfindungsgemäßen Verfahrens kann weiterhin dadurch sichergestellt werden, dass das Erzeugen der Eigentümerausweisdaten, wie bereits angedeutet, unter der Kontrolle des Betriebssystems des Datenträgers erfolgt und vorzugsweise lediglich dann, wenn dies die Quellapplikation beantragt. Auf diese Weise können auch sensible Daten zwischen verschiedenen Applikationen in einfacher und sicherer Weise ausgetauscht werden.

Des Weiteren umfasst das Verfahren einen weiteren Schritt des Übergebens einer Referenz auf die Eigentümerausweisdaten an die Zielapplikation, über welche die Zielapplikation auf das Objekt und damit auf die Nutzdaten des Objekts zugreifen kann. Bei einem Zugriff auf das Objekt über diese Referenz erkennt die Kontrollinstanz des Datenträgers die Zielapplikation als Eigentümer des Objekts. Die Quellapplikation hingegen greift auf das Objekt in der Regel über eine von der der Zielapplikation übergebenen Referenz verschiedene Referenz zu, welche in analoger Weise zuerst auf einen Datensatz zeigen kann, welcher verschieden ist von den für die Zielapplikation erzeugten Eigentümerausweisdaten und welcher die Quellapplikation als Eigentümer des Objekts ausweist.

Die Eigentümerausweisdaten werden als ein das Objekt beschreibender Metadatensatz erzeugt, welcher zusätzlich zu der Angabe über den Eigentümer des Objekts eine Referenz auf die Nutzdaten des Objekts umfasst. Der Metadatensatz kann weitere Informationen über das Objekt umfassen, beispielsweise über den Typ des Objekts, zur Klasse des Objekts und dergleichen. Das Objekt selbst umfasst somit verschiedene Anteile, von denen einer der Metadatensatz ist und ein anderer die erfindungsgemäß auszutauschenden Nutzdaten. Abhängig von einer verwendeten Implementierung müssen diese Anteile nicht in einem zusammenhängenden Speicherabschnitt des Datenträgers gespeichert sein. Ein Zugriff auf das Objekt erfolgt dann in der Regel über eine Referenz auf den Metadatensatz. Dieser wiederum umfasst weitere Referenzen, über welche dann andere Anteile des Objekts, beispielsweise die Nutzdaten, adressiert werden können.

Falls gemäß der im Datenträger verwendeten Implementierung mit Metadatensätzen gearbeitet wird, ist üblicherweise für die Quellapplikation für den Zugriff auf die Nutzdaten ebenfalls ein Metadatensatz vorgesehen, in welchem die Quellapplikation als Eigentümer des Objekts angegeben ist. Das Objekt, welches ursprünglich im alleinigen Eigentum der Quellapplikation stand, besitzt nach dem Erzeugen der Eigentümerausweisdaten für die Zielapplikation somit gemäß der zuletzt beschriebenen Ausführungsform zwei Metadatensätze. Diese unterscheiden sich zum einen darin, dass sie über verschiedene Referenzen adressiert werden, zum anderen darin, dass sie jeweils einen anderen Eigentümer für das Objekt ausweisen, einmal die Quellapplikation, einmal die Zielapplikation. Die restlichen Einträge der beiden Metadatensätze können identisch sein, insbesondere die Referenz auf die Nutzdaten. D.h. die auszutauschenden Nutzdaten sind im Datenträger weiterhin nur einmal gespeichert.

Wie erwähnt, erfolgt ein Zugreifen auf das Objekt durch die Zielapplikation über eine Referenz auf den Metadatensatz und ein Zugreifen auf die Nutzdaten des Objekts über die in dem Metadatensatz des Objekts enthaltene Referenz auf die Nutzdaten.

Vorzugsweise wird, nachdem die Eigentümerausweisdaten im Datenträger erzeugt worden sind, durch die erzeugende Instanz des Datenträgers eine Referenz auf die Eigentümerausweisdaten zuerst an die Quellapplikation übergeben. In einem nachfolgenden Schritt übergibt nun die Quellapplikation diese Referenz an die Zielapplikation, beispielsweise mittels eines bekannten Shareable Object-Mechanismus. D.h. der Schritt des Übergebens der Referenz auf die Eigentümerausweisdaten an die Zielapplikation umfasst den Teilschritt des Übergebens der Referenz an die Quellapplikation durch die erzeugende Instanz und den Teilschritt des Übergebens der Referenz an die Zielapplikation durch die Quellapplikation mittels Object Sharing.

Auf diese Weise wird sichergestellt, dass alleine die Quellapplikation vorgeben kann, welche andere Applikation Zugriff auf eines ihrer Objekte erhält. Die Verwendung bekannter, im Datenträger vorhandener Mechanismen zum Teilen von Ressourcen minimiert den Aufwand für eine Implementierung des erfindungsgemäßen Verfahrens erheblich.

Gemäß einer bevorzugten Ausführungsform werden die Eigentümerausweisdaten, wie erwähnt, von einem Betriebssystem des Datenträgers, vorzugsweise über eine dazu eingerichtete Programmierschnittstelle, erzeugt. Damit bleibt die Sicherheit des Verfahrens erhalten. Andere, nicht befugte Applikationen können von einem Zugriff auf die erzeugten Eigentümerausweisdaten sowie auf Daten, auf welche zum Erzeugen der Eigentümerausweisdaten zugegriffen werden muss, ausgeschlossen werden.

Vorzugsweise übergibt die Quellapplikation beim Antrag auf Erzeugung der Eigentümerausweisdaten der entsprechenden erzeugenden Instanz, beispielsweise dem Betriebssystem, eine Referenz auf das Objekt sowie einen Identifizierer der Zielapplikation, beispielsweise einen so genannten "application identifier" (AID). Damit kann die erzeugende Instanz dem Objekt selbst die zur Erzeugung der Eigentümerausweisdaten notwendigen Informationen entnehmen und dort als Eigentümer die von der Quellapplikation angegebene Zielapplikation ausweisen.

Wie vorstehend beschrieben, wird ein Objekt über einen dem Objekt zugeordneten Metadatensatz adressiert. Erfindungsgemäß besteht weiter das Erzeugen der Eigentümerausweisdaten im Kopieren des ursprünglichen Metadatensatzes und im Ändern der Eigentümerangabe in der Kopie. Die Referenz auf die Kopie wird dann in der vorstehend beschriebenen Weise an die Zielapplikation übergeben.

Vorzugsweise wird die erzeugende Instanz, beispielsweise das Betriebssystem, vor dem Erzeugen der Eigentümerausweisdaten prüfen, ob die Quellapplikation Eigentümer des Objekts ist. Alternativ oder zusätzlich prüft die erzeugende Instanz, ob die Zielapplikation der erzeugenden Instanz bekannt ist. Nur wenn diese Prüfung bzw. Prüfungen erfolgreich durchgeführt werden kann bzw. können, werden die Eigentümerausweisdaten erzeugt. Auf diese Weise kann eine missbräuchliche Verwendung des Verfahrens verhindert werden, wie beispielsweise dadurch, dass eine Applikation die Erzeugung von Eigentümerausweisdaten bezüglich eines Objektes beantragt, welches nicht in deren Eigentum steht. Ebenso kann dadurch verhindert werden, dass eine Applikation, welche am Betriebssystem vorbei, beispielsweise mittels Schadcode (zB Trojaner etc.), in dem Datenträger installiert worden ist, in der beschriebenen Weise Eigentum über ein fremdes Objekt erhält.

In der Regel werden die Eigentümerausweisdaten derart ausgebildet, dass diese die Zielapplikation lediglich temporär als Eigentümer des Objekts ausweisen. Im Zusammenhang mit einer Java Card™ kann dies beispielsweise durch Setzen eines "Temporary Object"-Flags erfolgen. Damit wird die Referenz auf die Eigentümerausweisdaten nicht dauerhaft gespeichert und beispielsweise beim Aufruf einer Garbage Collection wieder entfernt.

Es versteht sich, dass die Referenz auf die Eigentümerausweisdaten vorzugsweise in einem flüchtigen Speicher des Datenträgers, beispielsweise einem RAM-Speicher, gespeichert wird. Somit wird die Referenz bei einer Unterbrechung der Stromversorgung des Datenträgers bzw. einem Reset des Datenträgers automatisch gelöscht.

Das beschriebene Verfahren eignet sich insbesondere für die Verwendung im Zusammenhang mit einer Java Card™ als portablem Datenträger. Entsprechend sind die Quellapplikation und die Zielapplikation als auf dem Datenträger ausführbare Java Card™ Applets ausgebildet. Die Einrichtung zum Erzeugen von Eigentümerausweisdaten kann vorteilhafterweise als eine API-Methode des Betriebssystems des Datenträgers ausgebildet werden. Bestehende Java Card™ Komponenten, also Laufzeitumgebung, Virtuelle Maschine und Klassenbibliothek, können ansonsten unverändert beibehalten werden. Die beschriebene Erweiterung des bekannten Systems mittels der Einrichtung zum Erzeugen der Eigentümerausweisdaten erweitert die Funktionalität des Systems erheblich, während der Aufwand zur Anpassung minimal ist und bestehende Sicherheitsvorgaben weder verletzt noch eingeschränkt werden.

Die vorliegende Erfindung wird im Folgenden mit Bezug auf die beiliegenden Zeichnungen beispielhaft beschrieben. Darin zeigen
- Fig. 1: eine bevorzugte Ausführungsform eines erfindungsgemäßen portablen Datenträgers und
- Fig. 2: Schritte einer bevorzugten Ausführungsform des erfindungsgemäßen Verfahrens.

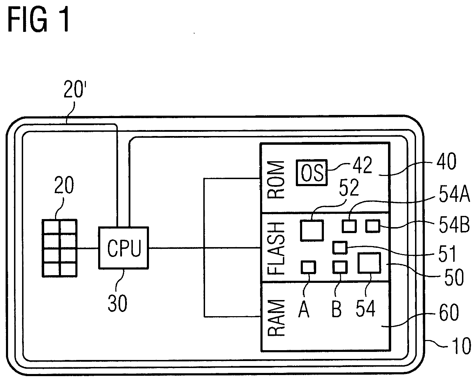

Mit Bezug auf Fig. 1 umfasst ein Datenträger 10, der hier als Chipkarte, insbesondere als Chipkarte in Form einer Java Card™, dargestellt ist, Datenkommunikationsschnittstellen 20, 20', einen Prozessor 30 sowie verschiedene Speicher 40, 50 und 60. Der Datenträger 10 kann auch in anderer Bauform vorliegen.

Als Datenkommunikationsschnittstellen 20, 20' umfasst der Datenträger 10 ein Kontaktfeld 20 zur kontaktbehafteten Datenkommunikation sowie eine Antennenspule 20' zur kontaktlosen Datenkommunikation. Alternative Datenkommunikationsschnittstellen können vorgesehen sein. Es ist weiterhin möglich, dass der Datenträger 10 lediglich eine Art der Datenkommunikation unterstützt, also lediglich kontaktbehaftet oder kontaktlos.

Der nicht flüchtige, nicht wiederbeschreibbare ROM-Speicher 40 umfasst ein Betriebssystem (OS) 42 des Datenträgers 10, welches den Datenträger 10 steuert. Zumindest Teile des Betriebssystems 42 können auch in dem nicht flüchtigen, wiederbeschreibbaren Speicher 50 gespeichert sein. Dieser kann beispielsweise als FLASH-Speicher (Fig) oder EEPROM-Speicher vorliegen.

Der Speicher 50 umfasst eine Laufzeitumgebung 51 in Form eines Java Card™ Runtime Environments, welche ihrerseits eine Klassenbibliothek und eine Virtuelle Maschine zum Ausführen entsprechender Applikationen umfasst, wie beispielsweise eine nachstehend genauer beschriebenen Quellapplikation A und einer Zielapplikation B, welche in Form von Java Card™ Applets vorliegen. Teile der Laufzeitumgebung 51 oder die gesamte Laufzeitumgebung 51 können auch in dem ROM-Speicher 40 gespeichert sein.

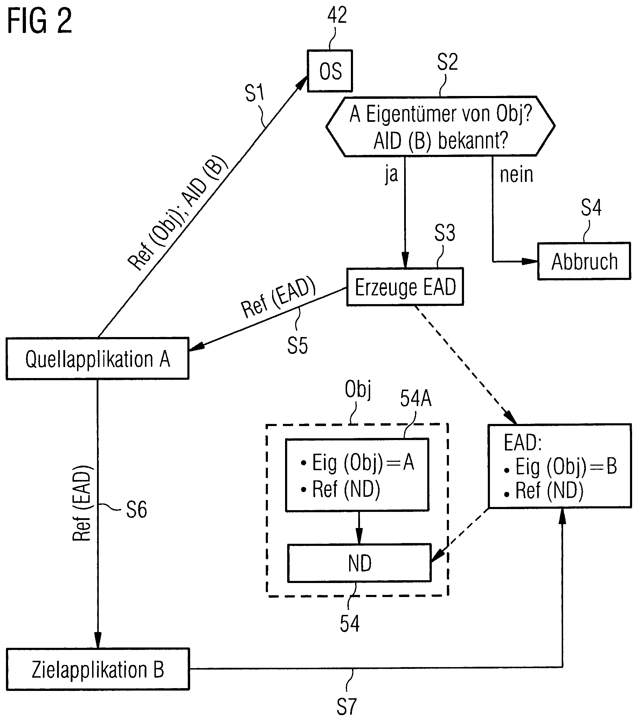

Der Speicher 50 umfasst weiterhin eine Applikation 52, welche eingerichtet ist, Eigentümerausweisdaten 54B zu erzeugen. Diese Eigentümerausweisdaten beziehen sich, wie nachstehend beschrieben, auf ein Objekt, welches einen Metadatensatz 54A und Nutzdaten 54 umfasst. Das Objekt steht im Eigentum der Quellapplikation A. Mittels der Eigentümerausweisdaten 54B wird auch der Zielapplikation B ein Zugriff auf das Objekt ermöglicht. Die Applikation 52 ist vorzugsweise als API-Methode des Betriebssystems 42 ausgebildet. Die Funktionsweise der Applikation 52 sowie die Bedeutung der Datensätze 54, 54A und 54B werden nachstehend mit Bezug auf Fig. 2 detailliert beschrieben.

Der flüchtige, wiederbeschreibbare RAM-Speicher 60 dient dem Datenträger 10 als Arbeitsspeicher.

Mit Bezug auf Figur 2 werden im Folgenden Schritte einer bevorzugten Ausführungsform eines Verfahrens zum Austauschen von Nutzdaten 54 auf einem portablen Datenträger 10 zwischen einer Quellapplikation A, welche Eigentümer eines die Nutzdaten 54 umfassenden Objekts Obj ist, und einer Zielapplikation B beschrieben.

Das Objekt Obj umfasst neben den Nutzdaten 54 Metadaten 54A. Diese Metadaten, welche auf dem Datenträger 10 nicht in demselben Speicherbereich wie die Nutzdaten 54 gespeichert sein müssen, umfassen das Objekt Obj beschreibende Informationen, insbesondere eine Angabe des Eigentümers Eig des Objekts Obj. Weitere Informationen im Metadatensatz 54A können beispielsweise den Typ des Objekts Obj, die Klasse des Objekts Obj oder dergleichen umfassen.

Im Falle des Objekts Obj wird in den Metadaten 54A als Eigentümer Eig des Objekts Obj die Quellapplikation A ausgewiesen. Weiter umfassen die Metadaten 54 im vorliegenden Beispiel eine Referenz Ref(ND) auf die Nutzdaten ND, 54. Ein Zugriff auf das Objekt Obj, beispielsweise durch die Quellapplikation A, erfolgt in der beispielhaft beschriebenen Implementation über eine Referenz auf den Metadatensatz 54A und von dort, soll weiter auf die Nutzdaten 54 des Objekts Obj zugegriffen werden, über die entsprechende Referenz Ref(ND), welche ebenfalls in den Metadaten 54 gespeichert ist. Dabei wird ein Zugriff auf das Objekt Obj von einer den Zugriff überwachenden Kontrollinstanz des Datenträgers 10 - im Zusammenhang mit der beschriebenen Java Card™ 10 ist als Kontrollinstanz die darauf installierte Virtuelle Maschine vorgesehen - nur gestattet, wenn der Zugriff auf das Objekt Obj von einem Eigentümer des Objekts Obj erfolgt.

Vorliegend kann dementsprechend über eine Referenz auf den Metadatensatz 54A lediglich die Quellapplikation A auf das Objekt Obj - und auf dessen Nutzdaten ND, 54 - zugreifen.

Quellapplikation A und Zielapplikation B sind, wie erwähnt, als Java Card™ Applets auf dem Datenträger 10 installiert.

In einem ersten Schritt S1 beantragt die Quellapplikation A beim Betriebssystem 42 das Erzeugen von Eigentümerausweisdaten EAD, 54B für die Zielapplikation B. Das Betriebssystem 42 dient im vorliegenden Bespiel als die Instanz des Datenträgers 10, welche eingerichtet und vorgesehen ist, die Eigentümerausweisdaten EAD zu erzeugen. Mittels dieser Eigentümerausweisdaten EAD wird es der Zielapplikation B, wie nachfolgend beschrieben, möglich werden, auf das Objekt Obj zuzugreifen.

Zusammen mit dem Antrag übergibt die Quellapplikation A dem Betriebssystem 42 eine Referenz Ref(Obj) auf das Objekt Obj sowie ein die Zielapplikation B identifizierendes Datum, beispielsweise einen entsprechenden Applikationsbezeichner AID(B). Die Referenz Ref(Obj) dient dem Betriebssystem 42 dazu, das Objekt Obj zu identifizieren, darauf zuzugreifen und die zur Erzeugung der Eigentümerausweisdaten EAD notwendigen Informationen zu erhalten. Mittels des Applikationsbezeichners AID kann die Zielapplikation B durch das Betriebssystem 42 eindeutig identifiziert werden.

In einem zweiten Schritt S2 prüft das Betriebssystem 42, ob die den Antrag stellende Applikation A tatsächlich Eigentümer des Objekts Obj ist und ob die Zielapplikation B dem Betriebssystem 42 bekannt ist. Verlaufen beide Prüfungen positiv, erzeugt das Betriebssystem 42 in Schritt S3 die Eigentümerausweisdaten EAD. Im gegenteiligen Fall, dass zumindest eine dieser Prüfungen fehlschlägt, wird das Verfahren in Schritt S4 abgebrochen.

Zum Erzeugen der Eigentümerausweisdaten EAD umfasst das Betriebssystem 42 vorzugsweise eine dazu vorgesehene API-Methode 52, beispielsweise der Form "public static Object allowAccess (Object Ref (Obj), AID AID (B))". Durch diese API-Methode 52 kann ein bekanntes Java Card™ System ergänzt werden, ohne dass gravierende, weitere Änderungen oder Anpassungen des Systems vorgenommen werden müssten. Die üblichen Sicherheitskontrollen des Systems bleiben erhalten, insbesondere die Eigentümerprüfung beim Zugriff auf ein Objekt.

Der Eigentümerausweisdatensatz EAD ist in der Regel im Wesentlichen analog zu dem Metadatensatz 54A des Objekts Obj aufgebaut, mit dem Unterschied, dass als Eigentümer Eig des Objekts Obj in den Eigentümerausweisdaten nun die Zielapplikation B ausgewiesen wird. Die Eigentümerausweisdaten EAD können also beispielsweise dadurch erzeugt werden, dass der Metadatensatz 54A kopiert und die Eigentümerangabe, wie beschrieben, angepasst wird. Insbesondere umfassen auch die Eigentümerausweisdaten EAD eine Referenz Ref(ND) auf die Nutzdaten ND, 54 des Objekts Obj.

Ein Zugriff auf das Objekt Obj in der vorstehend beschriebenen Art, über eine Referenz Ref(EAD) auf die Eigentümerausweisdaten EAD, kann somit erfolgreich, d.h. von der Virtuellen Maschine erlaubt, nur durch den in den Eigentümerausweisdaten EAD als Eigentümer des Objekts Obj ausgewiesenen Zugreifenden erfolgen - durch die Zielapplikation B. Um der Zielapplikation B einen solchen Zugriff auch praktisch zu ermöglichen, muss diese noch in den Besitz dieser Referenz Ref(EAD) kommen. Ein Übergeben der Referenz Ref(EAD) auf die Eigentümerausweisdaten EAD an die Zielapplikation B verläuft in zwei Teilschritten.

In einem ersten Teilschritt S5 übergibt das Betriebssystem 42 die Referenz Ref(EAD) an die Quellapplikation A. Würde die Quellapplikation A versuchen, über diese Referenz Ref(EAD) auf das Objekt Obj zuzugreifen, so würde die Virtuelle Maschine des Datenträgers 10 diesen Zugriff unterbinden, da die Applikation A von dem in den Eigentümerausweisdaten ausgewiesenen Eigentümer abweicht. Die Quellapplikation A kann aber weiterhin - erfolgreich - über die ihr vorliegende Referenz auf den Metadatensatz 54A auf das Objekt Obj zugreifen, wie vorstehend beschrieben. Das Objekt Obj hat nun zwei legitime Eigentümer, die Quellapplikation A und die Zielapplikation B.

In der Regel wird die Referenz Ref(EAD) auf die Eigentümerausweisdaten EAD derart ausgebildet, das die Zielapplikation B lediglich temporär Eigentümer des Objekts Obj ist. Im Zusammenhang mit der beschriebenen Java Card™ Umgebung kann dies mittels des Flags "Temporary Object" kenntlich gemacht werden. Auf diese Weise wird die Referenz Ref(EAD) nicht dauerhaft gespeichert und beispielsweise beim Aufruf einer Garbage Collection wieder entfernt. Die Referenz Ref(EAD) wird bevorzugt im flüchtigen RAM-Speicher 60 gespeichert. Auf diese Weise wird sichergestellt, dass bei einem Reset des Datenträgers 10 oder einer Unterbrechung der Energiezufuhr die Referenz Ref(EAD) gelöscht wird.

In einem zweiten Teilschritt S6 schließlich übergibt die Quellapplikation A die Referenz Ref(EAD) auf die Eigentümerausweisdaten EAD an die Zielapplikation B. Diese Übergabe kann beispielsweise mittels eines Shareable Object-Mechanismus erfolgen. Ein solcher bekannter Mechanismus ist in der vorstehend zitierten Spezifikation ("Runtime Environment Specification, Java Card™ Platform, Version 3.0.1, Classic Edition", der Firma Sun Microsystems Inc., Mai 2009) in den Kapiteln 6.2.4 bis 6.2.7 genau beschrieben. Auf diese Weise können standardisierte und erprobte Verfahren verwendet werden. Eine weitere, aufwändige Anpassung des Systems des Datenträgers 10 ist somit nicht erforderlich.

Nun ist die Zielapplikation B in der Lage, wie mit Bezug auf Schritt S7 illustriert, über die Referenz Ref(EAD) auf die Eigentümerausweisdaten EAD in vorstehend beschriebener Weise auf das Objekt Obj und dessen Nutzdaten ND, 54 zuzugreifen.

Das vorstehend beschriebene Verfahren hat somit zahlreiche Vorteile. Es lässt sich mittels einer sehr einfachen und nur geringfügigen Änderung eines bestehenden Systems, insbesondere einer nur geringfügigen Änderung der Java Card™ Spezifikation, realisieren. Der Zugriff auf das Objekt Obj wird nicht jeder beliebigen Applikation auf dem Datenträger 10, sondern lediglich der ausgewählten Zielapplikation B ermöglicht. Dabei kann dieser Zugriff nur von der ursprünglichen Eigentümerapplikation, vorliegend der Quellapplikation A, gewährt werden - einmal über den Antrag in Schritt S1, des Weiteren durch die Übergabe der Referenz in Schritt S6. Schließlich werden bereits in dem bestehenden System vorhandene Funktionalitäten optimal ausgenutzt, insbesondere die bekannten Shareable Object-Mechanismen, aber auch das Konzept temporärer Objekte sowie die allgemeinen Vorgaben des Objekt-Managements.

## Patentansprüche

1. Verfahren zum Austauschen von Nutzdaten (ND; 54) auf einem portablen Datenträger (10) zwischen einer Quellapplikation (A), welche Eigentümer eines die Nutzdaten (ND, 54) umfassenden Objekts (Obj) ist, und einer Zielapplikation (B), wobei ein Zugriff auf das Objekt (Obj) einem Eigentümer des Objekts (Obj) vorbehalten ist, wobei folgender Schritt durchgeführt wird:
- Erzeugen (S3) von dem Objekt (Obj) zugeordneten Eigentümerausweisdaten (EAD) durch eine erzeugende Instanz (OS, 42) des Datenträgers (10), wobei die Eigentümerausweisdaten (EAD) die Zielapplikation (B) neben der Quellapplikation (A) als Eigentümer des Objekts (Obj) ausweisen,
**dadurch gekennzeichnet, dass**
die Eigentümerausweisdaten (EAD) als ein das Objekt (Obj) beschreibender Metadatensatz erzeugt werden, welcher zusätzlich zu der Angabe über den Eigentümer des Objekts (Obj) eine Referenz (Ref(ND)) auf die Nutzdaten (ND, 54) des Objekts (Obj) umfasst,
und dass das Erzeugen der Eigentümerausweisdaten im Kopieren des ursprünglichen Metadatensatzes und im Ändern der Eigentümerangabe in der Kopie besteht,
und dass ein Zugriff auf das Objekt über unterschiedliche Referenzen, mit unterschiedlichen Eigentümern für das Objekt, einmal die Quellapplikation, einmal die Zielapplikation, erfolgt.

2. Verfahren nach Anspruch 1, **gekennzeichnet durch** den weiteren Schritt:
- Übergeben (S5, S6) einer Referenz (Ref(EAD)) auf die Eigentümerausweisdaten (EAD) an die Zielapplikation (B), über welche die Zielapplikation (B) auf das Objekt (Obj) und damit auf die Nutzdaten (ND, 54) zugreifen kann.

3. Verfahren nach Anspruch 2, **dadurch gekennzeichnet, dass** der Schritt des Übergebens der Referenz (Ref(EAD)) auf die Eigentümerausweisdaten (EAD) an die Zielapplikation (B) folgende Teilschritte umfasst:
- Übergeben (S5) der Referenz (Ref(EAD)) auf die Eigentümerausweisdaten (EAD) an die Quellapplikation (A) durch die die Eigentümerausweisdaten (EAD) erzeugende Instanz (OS, 42);
- Übergeben (S6) der Referenz (Ref(EAD)) an die Zielapplikation (B) durch die Quellapplikation (A) mittels eines bekannten Shareable Object-Mechanismus.

4. Verfahren nach einem der Ansprüche 1 bis 3, **dadurch gekennzeichnet, dass** die Eigentümerausweisdaten (EAD) auf Antrag der Quellapplikation (A) durch die erzeugende Instanz (OS, 42) erzeugt werden.

5. Verfahren nach Anspruch 4, **dadurch gekennzeichnet, dass** die Quellapplikation (A) beim Antrag (S1) auf Erzeugung der Eigentümerausweisdaten (EAD) bei der erzeugenden Instanz (OS, 42) eine Referenz (Ref(Obj)) auf das Objekt (Obj) sowie einen Identifizierer (AID(B)) der Zielapplikation (B) übergibt.

6. Verfahren nach einem der Ansprüche 1 bis 5, **dadurch gekennzeichnet, dass** die Eigentümerausweisdaten (EAD) von einem Betriebssystem (OS, 42) des Datenträgers (10) als erzeugender Instanz, vorzugsweise über eine dazu eingerichtete Programmierschnittstelle (52), erzeugt werden.

7. Verfahren nach einem der Ansprüche 1 bis 6, **dadurch gekennzeichnet, dass** die erzeugende Instanz (OS, 42) vor dem Erzeugen der Eigentümerausweisdaten (EAD) prüft (S2), ob die Quellapplikation (A) Eigentümer des Objekts (Obj) ist und/ oder ob die Zielapplikation (B) der erzeugenden Instanz (OS, 42) bekannt ist.

8. Verfahren nach Anspruch 7, **dadurch gekennzeichnet, dass** ein Zugreifen (S7) auf das Objekt (Obj) durch die Zielapplikation (B) über eine Referenz (Ref(EAD)) auf den Metadatensatz (EAD) und ein Zugreifen auf die Nutzdaten (ND, 54) des Objekts (Obj) über die Referenz (Ref(ND)) auf die Nutzdaten (ND) in dem Metadatensatz (EAD) des Objekts (Obj) erfolgen kann.

9. Verfahren nach einem der Ansprüche 1 bis 8, **dadurch gekennzeichnet, dass** eine Referenz auf die Eigentümerausweisdaten (EAD) in einem flüchtigen RAM-Speicher des Datenträgers (10) abgespeichert wird.

10. Verfahren nach einem der Ansprüche 1 bis 9, **dadurch gekennzeichnet, dass** der portable Datenträger (10) als Java Card™ ausgebildet wird und die Quellapplikation (A) und die Zielapplikation (B) als auf dem Datenträger (10) ausführbare Java Card™ Applets ausgebildet werden.

11. Portabler Datenträger (10), umfassend einen Prozessor (30), einen Speicher (40, 50, 60) sowie zumindest eine Quellapplikation (A) und eine Zielapplikation (B), welche auf dem Datenträger (10) ausführbar sind, wobei die Quellapplikation (A) Eigentümer eines Nutzdaten (ND) umfassenden Objekts (Obj) ist, und wobei ein Zugriff auf das Objekt (Obj) einem Eigentümer des Objekts (Obj) vorbehalten ist, wobei der Datenträger (10) eine Einrichtung (52) zum Erzeugen von Eigentümerausweisdaten (EAD) umfasst, welche eingerichtet ist, dem Objekt (Obj) zugeordnete Eigentümerausweisdaten (EAD) zu erzeugen, welche die Zielapplikation (B) neben der Quellapplikation (A) als Eigentümer des Objekts (Obj) ausweisen, **dadurch gekennzeichnet, dass** die Eigentümerausweisdaten (EAD) als ein das Objekt (Obj) beschreibender Metadatensatz ausgebildet sind, welcher zusätzlich zu der Angabe über den Eigentümer des Objekts (Obj) eine Referenz (Ref(ND)) auf die Nutzdaten (ND, 54) des Objekts (Obj) umfasst, und dass das die Eigentümerausweisdaten durch Kopieren des ursprünglichen Metadatensatzes und Ändern der Eigentümerangabe in der Kopie erzeugt sind,
und eingerichtet dass ein Zugriff auf das Objekt über unterschiedliche Referenzen, mit unterschiedlichen Eigentümern für das Objekt, einmal die Quellapplikation, einmal die Zielapplikation, erfolgt.

12. Datenträger (10) nach Anspruch 11, **dadurch gekennzeichnet, dass** der Datenträger (10) als Java Card™ ausgebildet ist und die Einrichtung (52) zum Erzeugen der Eigentümerausweisdaten (EAD) als eine API-Methode des Betriebssystems (OS, 42) ausgebildet ist.

## Claims

1. A method for exchanging useful data (ND, 54) on a portable data carrier (10) between a source application (A), which is the owner of an object (Obj) comprising the useful data (ND, 54), and a target application (B), wherein an access to the object (Obj) is reserved for an owner of the object (Obj), wherein the following step is carried out:
- generating (S3) the owner identification data (EAD) associated with the object (Obj) by a generating entity (OS, 42) of the data carrier (10), wherein the owner identification data (EAD) identify the target application (B) besides the source application (A) as an owner of the object (Obj),
**characterized in that**
the owner identification data (EAD) are generated as a metadata set describing the object (Obj) which comprises, in addition to the information about the owner of the object (Obj), a reference (Ref (ND)) to the useful data (ND, 54) of the object (Obj),
and that generating the owner identification data consists of copying the original metadata set and changing the owner information in the copy,
and that an access to the object is effected via different references, with different owners for the object, once the source application, once the target application.

2. The method according to claim 1, **characterized by** the further step of: delivering (S5, S6) a reference (Ref (EAD)) to the owner identification data (EAD) to the target application (B) via which the target application (B) can access the object (Obj) and thereby the useful data (ND, 54).

3. The method according to claim 2, **characterized in that** the step of delivering the reference (Ref (EAD)) to the owner identification data (EAD) to the target application (B) comprises the following substeps:
- delivering (S5) the reference (Ref (EAD)) to the owner identification data (EAD) to the source application (A) by the entity (OS, 42) generating the owner identification data (EAD);
- delivering (S6) the reference (Ref (EAD)) to the target application (B) by the source application (A) by means of a known shareable object mechanism.

4. The method according to any of claims 1 to 3, **characterized in that** the owner identification data (EAD) are generated by the generating entity (OS, 42) at the request of the source application (A).

5. The method according to claim 4, **characterized in that** the source application (A) upon request (S1) for generating the owner identification data (EAD) at the generating entity (OS, 42) delivers a reference (Ref (Obj)) to the object (Obj) as well as an identifier (AID (B)) of the target application (B).

6. The method according to any of claims 1 to 5, **characterized in that** the owner identification data (EAD) are generated by an operating system (OS, 42) of the data carrier (10) as the generating entity, preferably via an application programming interface (52) devised for this purpose.

7. The method according to any of claims 1 to 6, **characterized in that** before generating the owner identification data (EAD), the generating entity (OS, 42) checks (S2) whether the source application (A) is the owner of the object (Obj) and/or whether the target application (B) is known to the generating entity (OS, 42).

8. The method according to claim 7, **characterized in that** an accessing (S7) of the object (Obj) by the target application (B) can be effected via a reference (Ref (EAD)) to the metadata set (EAD) and an accessing of the useful data (ND, 54) of the object (Obj) via the reference (Ref (ND)) to the useful data (ND) in the metadata set (EAD) of the object (Obj).

9. The method according to any of claims 1 to 8, **characterized in that** a reference to the owner identification data (EAD) is stored in a volatile RAM storage of the data carrier (10).

10. The method according to any of claims 1 to 9, **characterized in that** the portable data carrier (10) is configured as a Java Card™ and the source application (A) and the target application (B) are configured as Java Cards™ applets executable on the data carrier (10).

11. A portable data carrier (10), comprising a processor (30), a storage (40, 50, 60) as well as at least a source application (A) and a target application (B) which are executable on the data carrier (10), wherein the source application (A) is the owner of the object (Obj) comprising the useful data (ND), and wherein an access to the object (Obj) is reserved to an owner of the object (Obj), wherein the data carrier (10) comprises a device (52) for generating owner identification data (EAD) which is devised to generate owner identification data (EAD) associated with the object (Obj), which identify the target application (B) besides the source application (A) as an owner of the object (Obj), **characterized in that** the owner identification data (EAD) are configured as a metadata set describing the object (Obj) which comprises in addition to the information about the owner of the object (Obj) a reference (Ref (ND)) to the useful data (ND, 54) of the object (Obj), and that the owner identification data are generated by copying the original metadata set and changing the owner information in the copy, and devised that an access to the object is effected via different references, with different owners for the object, once the source application, once the target application.

12. The data carrier (10) according to claim 11, **characterized in that** the data carrier (10) is configured as a Java Card™ and the device (52) for generating the owner identification data (EAD) is configured as an API method of the operating system (OS, 42).

## Revendications

1. Procédé d'échange de données utiles (ND; 54) sur un support de données (10) portable entre une application source (A) propriétaire d'un objet (Obj) comprenant les données utiles (ND, 54) et une application cible (B), cependant qu'un accès à l'objet (Obj) est réservé à un propriétaire de l'objet (Obj), cependant que l'étape suivante est réalisée :
- génération (S3), par une instance génératrice (OS, 42) du support de données (10), de données d'identité de propriétaire (EAD) affectées à l'objet (Obj), cependant que les données d'identité de propriétaire (EAD) désignent en plus de l'application source (A) l'application cible (B) comme propriétaire de l'objet (Obj),
**caractérisé en ce que**
les données d'identité de propriétaire (EAD) sont générées en tant qu'un jeu de métadonnées qui décrit l'objet (Obj) et qui, en plus de l'indication sur le propriétaire de l'objet (Obj), comprend une référence (Ref(ND)) aux données utiles (ND, 54) de l'objet (Obj),
et que la génération des données d'identité de propriétaire (EAD) consiste en le copiage du jeu de métadonnées d'origine et en la modification de l'indication du propriétaire dans la copie,
et que l'accès à l'objet a lieu par l'intermédiaire de différentes références, avec différents propriétaires pour l'objet, tantôt l'application cible, tantôt l'application source.

2. Procédé selon la revendication 1, **caractérisé par** l'autre étape :
- remise (S5, S6) d'une référence (Ref(EAD)) aux données d'identité de propriétaire (EAD) à l'application cible (B), par l'intermédiaire de laquelle l'application cible (B) peut accéder à l'objet (Obj) et ainsi aux données utiles (ND, 54).

3. Procédé selon la revendication 2, **caractérisé en ce que** l'étape de la remise de la référence (Ref(EAD)) aux données d'identité de propriétaire (EAD) à l'application cible (B) comprend les étapes partielles suivantes :
- remise (S5) de la référence (Ref(EAD)) sur les données d'identité de propriétaire (EAD) à l'application source (A) par l'instance (OS, 42) générant les données de propriétaire (EAD) ;
- remise (S6) de la référence (Ref(EAD)) à l'application cible (B) par l'application source (A) au moyen d'un mécanisme connu de partage d'objet.

4. Procédé selon une des revendications de 1 à 3, **caractérisé en ce que** les données d'identité de propriétaire (EAD) sont générées par l'instance (OS, 42) génératrice à la demande de l'application source (A).

5. Procédé selon la revendication 4, **caractérisé en ce que** l'application source (A), lors de la demande (S1) de génération des données d'identité de propriétaire (EAD), remet auprès de l'instance (OS, 42) génératrice une référence (Ref(Obj)) à l'objet (Obj) ainsi qu'un identifiant (AID(B)) de l'application cible (B).

6. Procédé selon une des revendications de 1 à 5, **caractérisé en ce que** les données d'identité de propriétaire (EAD) sont générées par une système d'exploitation (OS, 42) du support de données (10) en tant qu'instance génératrice, de préférence par l'intermédiaire d'une interface de programmation (52) aménagée à cet effet.

7. Procédé selon une des revendications de 1 à 6, **caractérisé en ce que** l'instance génératrice (OS, 42) vérifie (S2) avant la génération des données d'identité de propriétaire (EAD) si l'application source (A) est propriétaire de l'objet (Obj) et/ou si l'application cible (B) est connue de l'instance génératrice (OS, 42).

8. Procédé selon la revendication 7, **caractérisé en ce qu'**un accès (S7) à l'objet (Obj) par l'application cible (B) peut avoir lieu par l'intermédiaire d'une référence (Ref(EAD)) au jeu de métadonnées (EAD), et qu'un accès aux données utiles (ND, 54) de l'objet (Obj) peut avoir lieu par l'intermédiaire de la référence (Ref(ND)) au données utiles (ND) dans le jeu de métadonnées (EAD) de l'objet (Obj).

9. Procédé selon une des revendications de 1 à 8, **caractérisé en ce qu'**une référence aux données d'identité de propriétaire (EAD) est mémorisée dans une mémoire RAM volatile du support de données (10).

10. Procédé selon une des revendications de 1 à 9, **caractérisé en ce que** le support de données (10) portable est réalisé sous forme de Java Card™ et que l'application source (A) et l'application cible (B) sont réalisées sous forme de Java Card™ Applets exécutables sur le support de données (10).

11. Support de données (10) portable comprenant un processeur (30), une mémoire (40, 50, 60) ainsi qu'au moins une application source (A) et une application cible (B) exécutables sur le support de données (10), cependant que l'application source (A) est propriétaire d'un objet (Obj) comprenant des données utiles (ND), et cependant qu'un accès à l'objet (Obj) est réservé à un propriétaire de l'objet (Obj), cependant que le support de données (10) comprend un équipement (52) de génération de données d'identité de propriétaire (EAD), lequel est équipé pour générer des données d'identité de propriétaire (EAD) affectées à l'objet (Obj), lesquelles désignent en plus de l'application source (A) l'application cible (B) comme propriétaire de l'objet (Obj), **caractérisé en ce que** les données d'identité de propriétaire (EAD) sont réalisées en tant qu'un jeu de métadonnées qui décrit l'objet (Obj) et qui, en plus de l'indication sur le propriétaire de l'objet (Obj), comprend une référence (Ref(ND)) aux données utiles (ND, 54) de l'objet (Obj), et que les données d'identité de propriétaire sont générées par copiage du jeu de métadonnées d'origine et par modification de l'indication du propriétaire dans la copie,
et conçu de telle façon qu'un accès à l'objet a lieu par l'intermédiaire de différentes références, avec différents propriétaires pour l'objet, tantôt l'application cible, tantôt l'application source.

12. Support de données (10) selon la revendication 11, **caractérisé en ce que** le support de données (10) est réalisé sous forme de Java Card™ et que l'équipement (52) pour la génération des données d'identité de propriétaire (EAD) est conçu en tant qu'une méthode API du système d'exploitation (OS, 42).
